(19) Europäisches Patentamt
European Patent Office
Office européen des brevets

(11) **EP 2 674 332 A1**

(12) **EUROPÄISCHE PATENTANMELDUNG**

(43) Veröffentlichungstag:
**18.12.2013 Patentblatt 2013/51**

(51) Int Cl.:
***B60R 21/0132*** *(2006.01)*

(21) Anmeldenummer: **13167763.5**

(22) Anmeldetag: **15.05.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **11.06.2012 DE 102012209737**

(71) Anmelder: **ROBERT BOSCH GMBH**
**70442 Stuttgart (DE)**

(72) Erfinder:
• **Langohr, Oliver**
**70499 Weilimdorf (DE)**
• **Korn, Christian**
**70190 Stuttgart (DE)**

(54) **Verfahren und Steuergerät zur Ansteuerung einer Sicherungseinrichtung für ein Fahrzeug in einer Überrollsituation**

(57) Die Erfindung betrifft ein Verfahren zur Ansteuerung einer Sicherungseinrichtung (150) für ein Fahrzeug (100) in einer Überrollsituation. Das Verfahren umfasst einen Schritt des Bestimmens (268) eines Ansteuerungssignals (155) zum Ansteuern der Sicherungseinrichtung (155) basierend auf einer den Neigungswinkel des Fahrzeugs (100) in eine Fahrzeugquerrichtung repräsentierenden Größe und einer den Lenkeinschlag eines Rades des Fahrzeugs (100) repräsentierenden Größe.

Fig. 6

Printed by Jouve, 75001 PARIS (FR)

**Beschreibung**

Stand der Technik

Die vorliegende Erfindung bezieht sich auf ein Verfahren zur Ansteuerung einer Sicherungseinrichtung für ein Fahrzeug in einer Überrollsituation, auf ein entsprechendes Steuergerät sowie auf ein entsprechendes Computerprogrammprodukt gemäß den Hauptansprüchen.

Zum Schutz der Insassen können bei einem Fahrzeugüberschlag um die Fahrzeuglängsachse Sicherungseinrichtungen wie Gurtstraffer sowie Seiten- oder Curtain-Airbags ausgelöst werden.

Offenbarung der Erfindung

Vor diesem Hintergrund wird mit der vorliegenden Erfindung ein Verfahren zur Ansteuerung einer Sicherungseinrichtung für ein Fahrzeug in einer Überrollsituation, weiterhin ein Steuergerät, das dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erkennung und die Bestimmung eines Auslösezeitpunktes einer Sicherungseinrichtung kann durch ein Airbag-Steuergerät, das sogenannte Airbag-ECU, geleistet werden. Auf dem Airbag-Steuergerät kann sich ein Sensor befinden, der die Drehrate (omega_x) um die Fahrzeug-x-Achse, auch als Längsachse bezeichnet, misst. Außerdem kann auf einem Mikrokontroller ein spezieller Rollover-Sensieralgorithmus (RoSe) ausgeführt werden, der die Drehrate omega_x um die Fahrzeug-x-Achse zeitlich integriert und somit den Drehwinkel phi_x bestimmt und die tiefpassgefilterte Drehrate gegen eine winkelabhängige Schwelle vergleicht. Wird die winkelabhängige und applizierbare Schwelle von der gefilterten Drehrate überschritten und somit eine Feuerschwelle erreicht, kann eine Sicherungseinrichtung beziehungsweise ein Rückhaltemittel gezündet werden.

Generell richtet sich die genannte Feuerschwelle nach dem Energiesatz, wobei der Drehwinkel die aktuelle potenzielle Energie des Fahrzeugs und die Drehrate die aktuelle kinetische Energie des Fahrzeugs beschreiben. Überschreitet die Summe beider Energien einen bestimmten Wert, so wird es zum Überschlag kommen. Bei kleinem Winkel ist also die Drehratenschwelle hoch; mit größer werdendem Winkel wird die Drehratenschwelle immer kleiner.

Je nachdem, aus welcher Situation heraus es zu einem Überschlag kommen kann, kann die winkelabhängige Feuerschwelle mehr oder weniger sensitiv appliziert werden. Algorithmen können mithilfe der anliegenden lateralen Beschleunigung des Fahrzeugs erkennen, ob sich das Fahrzeug in einer Böschung oder Rampe befindet oder in einer Situation eines Bodenverhakungsüberschlags, einer sogenannten Soiltrip-Situation. Entsprechend schalten die Algorithmen in einen speziellen Auslösepfad mit für den jeweiligen Fall applizierten winkelabhängigen Schwellen.

Wenn ein Fahrzeug seitlich eine Böschung oder Rampe herunterrutscht, steigt mit der Geschwindigkeit die Wahrscheinlichkeit für einen Überschlag. Dabei kann neben der Geschwindigkeit die Radstellung der Vorderräder, also der Lenkeinschlag beziehungsweise der Lenkwinkel, einen Einfluss auf die Überschlagwahrscheinlichkeit haben. So kann die Überschlagswahrscheinlichkeit steigen, wenn die Vorderradstellung böschungsaufwärts ist, verglichen mit dem Fall, dass der Lenkwinkel null ist. Mit anderen Worten kann die Überschlagswahrscheinlichkeit bei einem Einschlag der Vorderräder entgegen der Bewegungsrichtung des Fahrzeugs steigen, beziehungsweise die Überschlagswahrscheinlichkeit kann sinken bei einem Lenkwinkel in Bewegungsrichtung des Fahrzeugs. Dies bedeutet, dass bei böschungsaufwärtsgerichteten Vorderrädern bereits bei einer niedrigeren Geschwindigkeit ein Überschlag eintreten kann. Gemäß Ausführungsformen der vorliegenden Erfindung kann dem Lenkwinkel bei der Bestimmung der

Überschlagwahrscheinlichkeit Rechnung getragen werden. Somit kann bereits sehr früh eine qualitative Aussage über einen bevorstehenden Überschlag getroffen werden. Ein solcher Zeitgewinn ist von besonderem Vorteil, da einige Sicherungseinrichtungen zur Entfaltung der vollen Schutzfunktionalität ein rechtzeitiges Auslösen des Schutzmittels zwingend voraussetzen. Der optimale Zeitpunkt kann erreicht werden, wenn die Information über einen bevorstehenden oder bereits tatsächlich passierenden Überschlag rechtzeitig zur Verfügung steht.

Im Falle von bestimmten Überschlagssituationen wie Böschungs- oder Abhangüberschlag hat der Lenkwinkel einen direkten Einfluss auf die Überschlagwahrscheinlichkeit, wohingegen der Lenkwinkel keinen Einfluss auf andere Überschlagssituationen wie einen Bordsteinanprall- oder Bodenverhakungsüberschlag hat.

Ein Verfahren zur Ansteuerung einer Sicherungseinrichtung für ein Fahrzeug in einer Überrollsituation weist den folgenden Schritt auf:

Bestimmen eines Ansteuerungssignals zum Ansteuern der Sicherungseinrichtung basierend auf einer den Neigungswinkel des Fahrzeugs in eine Fahrzeugquerrichtung repräsentierenden Größe und einer den Lenkeinschlag eines Rades des Fahrzeugs repräsentierenden Größe.

Bei dem Fahrzeug kann es sich um ein Kraftfahrzeug, beispielsweise einen Personenkraftwagen, einen Lastkraftwagen oder ein sonstiges Nutzfahrzeug handeln. Unter einer Sicherungseinrichtung kann ein Insassenschutzsystem wie z. B. ein Airbag-System oder Gurtstraffer verstanden werden. Dabei kann ein Insassenschutzsystem aus einem Schutzsystem-Steuergerät, einer Auslöse-Einrichtung für einen Airbag und beispielsweise einem Seitenairbag oder Kopf-/Schulter-Airbagmodul bestehen, wobei ein zentrales Schutzsystem-Steuergerät eine Vielzahl von Auslöse-Einrichtungen und zugeordneten Airbags ansteuern kann. Dabei kann das Schutzsystem-Steuergerät aus zum Steuergerät externen Sensordaten und gleichzeitig oder alternativ aus im Steuergerät selbst verbauten Sensoren den Zeitpunkt für ein Auslösen des Insassenschutzsystems bestimmen. Bei einer positiven Auslöseentscheidung kann ein Ansteuerungssignal von dem Schutzsystem-Steuergerät ausgegeben und an die Auslöse-Einrichtung übermittelt werden. Eine Auslöseentscheidung kann auch als Feuerschwelle bezeichnet werden. Unter einer Überrollsituation kann hier ein Fahrzeugüberrollen, das heißt ein Überschlag um die Längsachse des Fahrzeugs, verstanden werden. Ein Fahrzeugüberrollen kann beispielsweise mit einem oberflächenmikromechanischen Drehratensensor und hochauflösenden Beschleunigungssensoren in Fahrzeugquer- und/oder- hochrichtung sensiert werden. Unter der den Neigungswinkel des Fahrzeugs in eine Fahrzeugquerrichtung repräsentierenden Größe kann der Winkel verstanden werden, der bei einer Drehung um die in Bewegungsrichtung des Fahrzeugs verlaufende x-Achse entsteht. Beispielsweise kann es sich bei der Größe um einen Rollwinkel oder um eine von dem Rollwinkel abhängende Größe handeln. Die x-Achse kann dabei auch als Roll-, Wank - oder Längsachse bezeichnet werden. Ein Rollwinkel kann auch als Querneigungswinkel bezeichnet werden. Unter der den Lenkeinschlag eines Rades des Fahrzeugs repräsentierenden Größe kann die Radstellung der Vorderräder bei einem Fahrzeug, also nicht die Stellung des Lenkrads, verstanden werden. Darunter kann beispielsweise der Lenkwinkel oder auch der mittlere Radlenkwinkel der gelenkten Achse im kräftefreien Zustand verstanden werden.

Unter Verwendung des Verfahrens kann beispielsweise ein System zur Ansteuerung von Zündmitteln in Böschungs-Überschlagssituationen unter Verwendung des Lenkwinkels realisiert werden.

Gemäß einer Ausführungsform kann die den Neigungswinkel des Fahrzeugs in eine Fahrzeugquerrichtung repräsentierende Größe ein Rollwinkel des Fahrzeugs sein. Gemäß einer weiteren Ausführungsform kann die den Lenkeinschlag eines Rades des Fahrzeugs repräsentierende Größe ein Lenkwinkel des Fahrzeugs sein. Somit kann das Ansteuerungssignal basierend auf dem Rollwinkel und dem Lenkwinkel des Fahrzeugs bestimmt werden.

Beispielsweise kann die den Neigungswinkel repräsentierende Größe mit der den Lenkeinschlag repräsentierenden Größe verknüpft werden. Die Ansteuerung der Sicherheitseinrichtung kann auf der Verknüpfung der beiden Größen basieren. Somit kann das Ansteuersignal basierend auf der Verknüpfung der beiden Größen bestimmt werden.

Das Ansteuerungssignal kann ferner basierend auf zumindest einem Beschleunigungswert bestimmt werden, wobei der Beschleunigungswert eine lineare Beschleunigung  des Fahrzeugs repräsentiert. Der Beschleunigungswert kann zumindest eine Beschleunigung quer zur Fahrtrichtung repräsentieren. Ferner kann der Beschleunigungswert eine Beschleunigung senkrecht zur Fahrtrichtung repräsentieren. Ferner kann es sich bei dem Beschleunigungswert auch um einen Beschleunigungswert quer zur Fahrtrichtung und einen Beschleunigungswert senkrecht zur Fahrtrichtung handeln. Dabei kann der Bescheinigungswert sowohl zur Plausibilitätsüberprüfung als auch zum Erkennen der Überrollart eingesetzt werden.

Ferner kann mit einem Schritt des Ermittelns eine Überrollart der Überrollsituation basierend auf dem zumindest einem Beschleunigungswert ermittelt werden. Dabei kann im Schritt des Bestimmens das Ansteuersignal basierend auf der Überrollart, dem Rollwinkel oder der den Neigungswinkel des Fahrzeugs in eine Fahrzeugquerrichtung repräsentierenden Größe und dem Lenkwinkel oder der den Lenkeinschlag eines Rades des Fahrzeugs repräsentierenden Größe bestimmt werden. Bei einer Überrollart kann unterschieden werden zwischen Böschungs-, Abhang-, Bordsteinanprall- oder Bodenverhakung- beziehungsweise "Soil Trip"-Überschlag. Eine Ausführungsform der vorliegenden Erfindung kann insbesondere bei Böschungs- und/oder Abhangüberschlag bereits frühzeitig einen bevorstehenden Überschlag detektieren.

In einem Schritt des Normierens kann der Lenkwinkel unter Verwendung eines maximal erreichbaren Lenkwinkels des Fahrzeugs normiert werden, um einen normierten Lenkwinkel zu ermitteln. Dabei kann im Schritt des Bestimmens das Ansteuerungssignal basierend auf dem normierten Lenkwinkel bestimmt werden. Diese Lösung hat den Vorteil, dass das Verfahren robuster einzusetzen ist. In entsprechender Weise kann die den Lenkeinschlag eines Rades des Fahrzeugs repräsentierende Größe normiert und zum Bestimmen des Ansteuersignals verwendet werden.

In einem Schritt des Schwellwertbestimmens kann ein Schwellwert unter Verwendung einer Rollrate, dem Rollwinkel oder der den Neigungswinkel des Fahrzeugs in eine Fahrzeugquerrichtung repräsentierenden Größe und dem Lenkwinkel oder der den Lenkeinschlag eines Rades des Fahrzeugs repräsentierenden Größe bestimmt werden, wobei im Schritt des Bestimmens das Ansteuerungssignal basierend auf dem Schwellwert bestimmt wird. Die Verwendung eines  Schwellwertes erleichtert das Herbeiführen einer Auslöseentscheidung für die Sicherungseinrichtung, da nun ein aktueller Fahrzeugzustand, der über aktuelle Sensorwerte bestimmt werden kann, nur mit dem Schwellwert verglichen werden kann. Dabei kann eine Anpassung eines Schwellwertes für die Feuerschwelle in direkter Abhängigkeit von Rollrate, Rollwinkel und Lenkwinkel bzw. dem Rollwinkel und dem Lenkwinkel entsprechenden Größen erfolgen.

Im Schritt des Schwellwertbestimmens kann der normierte Lenkwinkel in Abhängigkeit einer in Bezug zu dem Rollwinkel gesetzten Lenkwinkelrichtung mit einer vordefinierten Lenkwinkelkonstante multipliziert werden, um einen Korrekturwert für den Schwellwert zu bestimmen. Der Schwellwert kann unter Verwendung des Korrekturwerts bestimmt werden. Diese Lösung hat den Vorteil, dass bei einem Lenkwinkel böschungsaufwärts ein anderer Korrekturwert für den Schwellwert bestimmt werden kann als bei einem böschungsabwärts gerichteten Lenkwinkel. Dabei kann anstelle des Lenkwinkels in entsprechender Weise die den Lenkeinschlag eines Rades des Fahrzeugs repräsentierende Größe verwendet werden. Der Lenkeinschlag kann sich je nach Richtung bezogen auf die Böschung beziehungsweise den Abhang unterschiedlich auf die Wahrscheinlichkeit für eine Überschlagsituation auswirken. Durch den Einsatz von zwei unterschiedlichen Konstanten für den Korrekturwert in Abhängigkeit der Lenkwinkelrichtung kann diesem Umstand Rechnung getragen werden.

Im Schritt des Schwellwertbestimmens kann in Abhängigkeit eines Vergleichs des Rollwinkels mit einem maximalen Rollwinkelwert und einem Vergleich der Rollrate mit einem minimalen Rollratenwert der Rollwinkel mit dem Lenkwinkel multipliziert werden, um einen Ergebniswert zu erhalten. Abhängig von einem Vorzeichen des Ergebniswerts kann der Schwellwert unter Verwendung des im Schritt des Normierens bestimmten normierten Lenkwinkels und der vordefinierten Lenkwinkelkonstante oder unter Verwendung des im Schritt des Normierens bestimmten normierten Lenkwinkels und einer weiteren vordefinierten Lenkwinkelkonstante bestimmt werden. Der Vergleich beziehungsweise die Überwachung des Rollwinkels auf ein Maximum und der Rollrate auf ein Minimum kann die Berechnung des Schwellwertes beziehungsweise des mit dem Schwellwert zu vergleichenden Wertes erleichtern, da bei einer zu kleinen Rollrate ein Überschlag unwahrscheinlich ist beziehungsweise bei einem zu großen Rollwinkel der Überschlag bereits kurz bevorsteht. Im ersten Fall ist eine Berechnung nicht erforderlich, da es zu keinem Überschlag in absehbarer Zeit kommen wird, im zweiten Fall ist die Berechnung auch zu vernachlässigen, da das Fahrzeug bereits in einer Überrollsituation sich befindet und somit die Schutzeinrichtung gezündet wird, wenn die Schutzeinrichtung nicht bereits ausgelöst wurde. Dabei kann anstelle des Rollwinkels in entsprechender Weise die den Neigungswinkel des Fahrzeugs in eine Fahrzeugquerrichtung repräsentierende Größe verwendet werden.

Die vorliegende Erfindung schafft ferner ein Steuergerät, das ausgebildet ist, um die Schritte des erfindungsgemäßen Verfahrens in entsprechenden Einrichtungen durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Die vorliegende Erfindung schafft ferner eine Sicherungsvorrichtung für ein Fahrzeug mit folgenden Merkmalen:

einer Sicherungseinrichtung; und

einem Steuergerät zur Ansteuerung einer Sicherungseinrichtung, wobei das Steuergerät ausgebildet ist, um das Ansteuersignal für die Sicherungseinrichtung zu bestimmen.

Unter einer Sicherungsvorrichtung kann ein System aus einer Sicherungseinrichtung und einem Steuergerät zur Ansteuerung der Sicherungseinrichtung verstanden werden. Unter einer Sicherungseinrichtung kann ein Insassenschutzsystem verstanden werden. Bei dem Insassenschutzsystem kann es sich um ein Rückhaltesystem handeln, das beispielsweise einen Airbag und/oder einen Gurtstraffer umfasst. Bei dem Airbag kann es sich um einen Seitenairbag oder Kopf-/Schulter-Airbag handeln. In dem Steuergerät können ein Drehratensensor und zumindest ein Beschleunigungssensor enthalten sein. Weiterhin kann das Steuergerät eine Schnittstelle zum Einlesen des Lenkwinkels ausweisen.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:

Fig. 1        eine schematische Darstellung eines Fahrzeugs mit einer Sicherungsvorrichtung, gemäß einem Ausführungsbeispiel der vorliegenden Erfindung;

Fig. 2        ein Steuergerät gemäß einem Ausführungsbeispiel der vorliegenden Erfindung;

Fig. 3          ein Ablaufdiagramm eines Überschlag-Erkennungsalgorithmus gemäß einem Ausführungsbeispiel der vorliegenden Erfindung;

Fig. 4          ein Ablaufdiagramm eines Überschlag-Erkennungsalgorithmus gemäß einem weiteren Ausführungsbeispiel der vorliegenden Erfindung;

Fig. 5          ein Ablaufdiagramm zur Bestimmung eines Korrekturwerts für den Schwellwert gemäß einem Ausführungsbeispiel der vorliegenden Erfindung; und

Fig. 6 und Fig. 7          die Vorzeichenkonvention für den Rollwinkel und den Lenkwinkel anhand eines stehenden Fahrzeugs.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

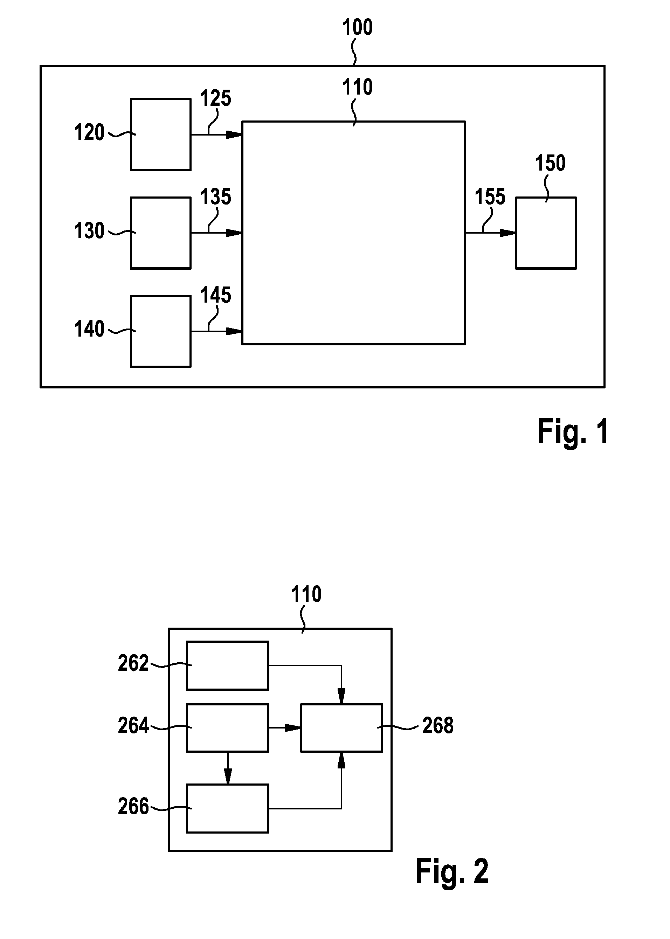

Fig. 1 zeigt eine schematische Darstellung eines Fahrzeugs 100 mit einer Sicherungsvorrichtung gemäß einem Ausführungsbeispiel der vorliegenden Erfindung. In dem Fahrzeug 100 ist ein Steuergerät 110 angeordnet, welches mit einem Drehwinkelsensor 120, der eine Rollrate 125 ausgibt, einem Beschleunigungssensor 130, der einen Beschleunigungswert 135 ausgibt, und einem Lenkwinkelsensor 140, der einen Lenkwinkel 145 ausgibt, verbunden ist. Weiterhin ist das Steuergerät 110 mit einer Sicherungseinrichtung 150 verbunden. Bei der Sicherungseinrichtung 150 kann es sich um ein Airbag-System handeln. Die Sicherungseinrichtung 150 kann aber auch ein anderes Insassenschutzsystem darstellen. Das Steuergerät 110 ist ausgebildet, um ein Ansteuerungssignal 155 für die Sicherungseinrichtung 150 auszugeben, das von der Sicherungseinrichtung 150 empfangen wird. Der Lenkwinkelsensor 140 kann auch ein erweitertes Gerät sein, das z. B. ausgebildet ist, um anhand eines Lenkradwinkelsensors und mithilfe eines geeigneten Algorithmus den Lenkwinkel zu berechnen.

Gemäß einem Ausführungsbeispiel kann anstelle des Drehwinkelsensors 120 eine Einrichtung zur Bestimmung einer den Neigungswinkel des Fahrzeugs 100 in eine Fahrzeugquerrichtung repräsentierenden Größe vorgesehen sein. Die den Neigungswinkel des Fahrzeugs 100 in die Fahrzeugquerrichtung repräsentierende Größe kann dem Rollwinkel entsprechen oder auf dem Rollwinkel basieren oder es kann der Rollwinkel aus der Größe bestimmbar sein oder von der Größe abhängig sein. Im Folgenden werden Ausführungsbeispiele unter Verwendung des Rollwinkels beschrieben, der als ein stellvertretendes Beispiel für die den Neigungswinkel des Fahrzeugs in die Fahrzeugquerrichtung repräsentierende Größe angesehen kann.

Gemäß einem Ausführungsbeispiel kann anstelle des Lenkwinkelsensors 140 eine Einrichtung zur Bestimmung einer den Lenkeinschlag eines Rades des Fahrzeugs 100 repräsentierenden Größe vorgesehen sein. Die den Lenkeinschlag eines Rades des Fahrzeugs 100 repräsentierende Größe kann dem Lenkwinkel entsprechen oder auf dem Lenkwinkel basieren oder es kann der Lenkwinkel aus der Größe bestimmbar sein oder von der Größe abhängig sein. Im Folgenden werden Ausführungsbeispiele unter Verwendung des Lenkwinkels beschrieben, der als ein stellvertretendes Beispiel für die den Lenkeinschlag eines Rades des Fahrzeugs 100 repräsentierende Größe angesehen kann.

Das Steuergerät 110 ist ausgebildet, um ein Ansteuerungssignal an die Sicherungseinrichtung 150 auszugeben. Weiterhin ist das Steuergerät 110 ausgebildet, um von dem Drehwinkelsensor 120 eine Rollrate 125 zu empfangen und daraus einen Rollwinkel zu bestimmen. Das Steuergerät 110 ist ausgebildet, um einen Lenkwinkel 145 vom Lenkwinkelsensor 140 und ein Beschleunigungssignal 135 von dem Beschleunigungssensor 130 zu empfangen. Weiterhin ist das Steuergerät 110 ausgebildet, um aus dem Beschleunigungssignal 135 eine Überrollart zu bestimmen, sowie aus der Rollrate 125, dem Rollwinkel und dem Lenkwinkel 145 das Ansteuerungssignal 155 für die Sicherungseinrichtung zu ermitteln.

In einem Ausführungsbeispiel der vorliegenden Erfindung sind der Drehratensensor 120 und der zumindest eine Beschleunigungssensor 130 in das Steuergerät 110 integriert. In einem weiteren Ausführungsbeispiel der vorliegenden Erfindung misst ein Beschleunigungssensor 130 die Beschleunigung quer zur Fahrtrichtung und ein weiterer Beschleunigungssensor 130 die Beschleunigung senkrecht zur Fahrtrichtung.

Die Radstellung der Vorderräder des Fahrzeugs 100, beziehungsweise der Lenkwinkel 145, haben einen Einfluss auf die Überschlagswahrscheinlichkeit oder Roll-over-Wahrscheinlichkeit im Falle des Herabrutschens des Fahrzeugs 100 entlang einer Böschung hat. So zeigen Versuche, dass ein Überschlag wahrscheinlicher wird, genauer gesagt schon bei geringerer Geschwindigkeit passiert, sofern die Vorderradstellung böschungsaufwärts ist, verglichen mit dem Fall, dass der Lenkwinkel 145 null ist.

Indem der Lenkwinkel 145 in die Algorithmusentscheidung 155 mit einbezogen wird, könnte der Effekt schon vorausschauend berücksichtigt werden. Eine Feuerentscheidung 155 kann dann schneller getroffen werden.

Die vorliegende Erfindung stellt einen Algorithmus vor, der die Lenkwinkelinformation 145 während eines Fahrzeugüberschlages mit auswertet und basierend auf dieser Auswertung, veränderte Feuerschwellen für die Sicherungseinrichtung 150 berechnet, sofern sich das Fahrzeug 100 in einer Böschungsfahrt befindet. So kann bei böschungsaufwärts zeigendem Lenkwinkel 145, die Feuerschwelle gesenkt werden und somit früher als bisher ein Rückhaltemittel 150 gezündet werden und der Schutz des Insassen in einer solchen Situation verbessert werden. Zur Entfaltung der vollen Schutzfunktionalität ist ein rechtzeitiges Auslösen der Schutzmittel 150 entscheidend.

Umgekehrt sieht der Algorithmus auch die Einstellmöglichkeit vor, im Falle einer nicht böschungsaufwärts gerichteten Lenkung, also z. B. böschungsabwärts, die Feuerschwellen anzuheben und damit einer gesenkten Überschlagswahrscheinlichkeit Rechnung zu tragen.

Fig. 2 zeigt ein Steuergerät 110 gemäß einem Ausführungsbeispiel der vorliegenden Erfindung. Dabei kann es sich um das anhand von Fig. 1 beschriebene Steuergerät handeln. Das Steuergerät 110 weist eine Einrichtung 262 zum Ermitteln der Überrollart, eine Einrichtung 264 zum Normieren eines Lenkwinkels, eine Einrichtung 266 zur Schwellwertbestimmung sowie eine Einrichtung 268 zum Bestimmen eines Auslösesignals für eine Sicherungseinrichtung auf. Mittels der Einrichtungen 262, 264, 266 und 268 ist das Steuergerät 100 ausgebildet, um die Schritte eines Verfahrens zur Ansteuerung einer Sicherungseinrichtung für ein Fahrzeug in einer Überrollsituation durchzuführen bzw. umzusetzen. Die Einrichtung 262 zum Ermitteln der Überrollart ist verbunden mit der Einrichtung 268 zum Bestimmen eines Auslösesignals. Die Einrichtung 264 zum Normieren eines Lenkwinkels ist verbunden mit der Einrichtung 266 zur Schwellwertbestimmung und mit der Einrichtung 268 zum Bestimmen eines Auslösesignals. Weiterhin sind die Einrichtung 266 zur Schwellwertbestimmung und die Einrichtung 268 zur Bestimmung eines Auslösesignals miteinander verbunden.

Das Steuergerät 110 ist, wie in Fig. 1 dargestellt, ausgebildet, um eine Rollrate von einem Drehratensensor, ein Beschleunigungssignal von einem Beschleunigungssensor und einen Lenkwinkel von einem Lenkwinkelsensor zu empfangen. Das Steuergerät 110 ist ausgebildet die Signale weiterzuverarbeiten und ein Ansteuerungssignal 155 für zumindest eine Sicherungseinrichtung 150 auszugeben.

Die Einrichtung 262 zum Ermitteln einer Überrollart ist ausgebildet, um unter Verwendung zumindest eines Beschleunigungssignals eine Überrollart zu bestimmen. Die Einrichtung 264 zum Normieren eines Lenkwinkels ist ausgebildet, um unter Verwendung des Lenkwinkels und eines für das Fahrzeug bestimmten maximalen Lenkwinkels einen normierten Lenkwinkel zu bestimmen. Die Einrichtung 266 zur Schwellwertbestimmung ist ausgebildet, um unter Verwendung einer Rollrate, dem aus der Rollrate bestimmbaren Rollwinkel und dem normierten Lenkwinkel einen Schwellwert für die Auslöseentscheidung zu bestimmen. Die Einrichtung 268 zum Bestimmen eines Auslösesignals für eine Sicherungseinrichtung ist ausgebildet, um unter Verwendung der Überrollart, dem Lenkwinkel, der Rollrate, dem Rollwinkel sowie dem Schwellwert für die Auslöseentscheidung ein Auslösesignal für die Sicherungseinrichtung zu bestimmen und auszugeben.

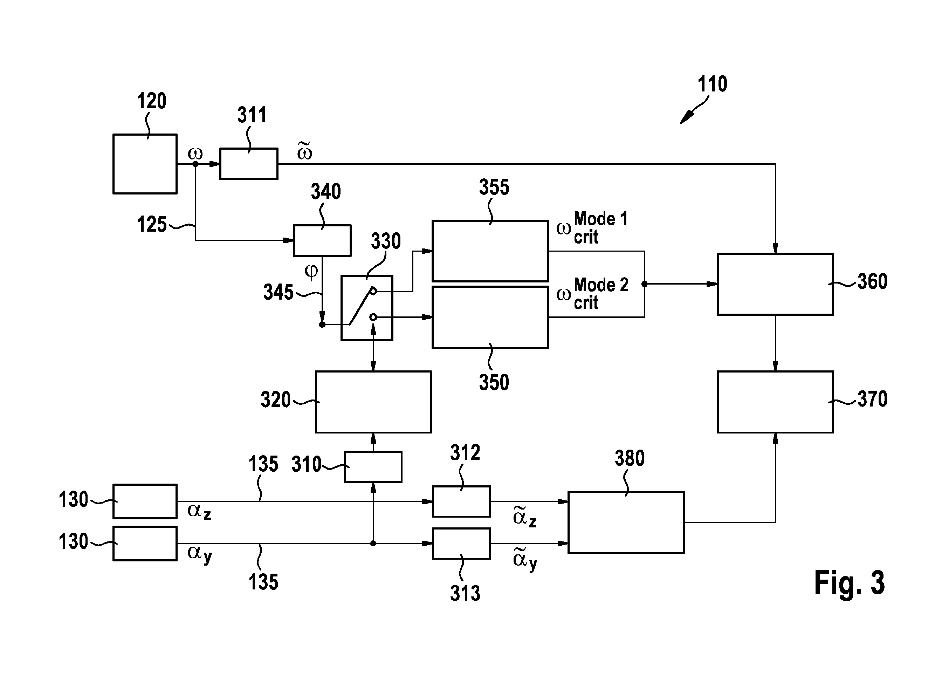

Fig. 3 zeigt eine Vorrichtung, die ausgebildet ist, um einen Überschlag-Erkennungsalgorithmus gemäß einem Ausführungsbeispiel der vorliegenden Erfindung auszuführen. Die Vorrichtung kann beispielsweise in dem in Fig. 1 gezeigten Fahrzeug eingesetzt werden. Die Vorrichtung weist einen Drehwinkelsensor 120, zwei Beschleunigungssensoren 130 sowie ein Steuergerät 110 auf. Das Steuergerät 110 weist Filtereinrichtungen 310, 311, 312, 313, eine Einrichtung 320 zur Bestimmung einer Überrollart, eine Einrichtung 330 der Auswahl der Schwellwertkalkulation, eine Einrichtung 340 des Integrierens, wobei die Einrichtung 340 des Integrierens ausgebildet ist, einen Rollwinkel 345 auszugeben, Einrichtungen zur Schwellwertberechnung 350, 355, eine Einrichtung 360 zur Überwachung des Überschlagsschwellwerts, eine Einrichtung 370 zur Auslöseentscheidung für eine Sicherheitseinrichtung sowie eine Einheit 380 zur Plausibilisierung der Auslöseentscheidung auf. Die Einrichtung 370 zur Auslöseentscheidung kann ausgebildet sein, um ein Ansteuerungssignal 155 für eine Sicherungseinrichtung auszugeben.

Einer der Beschleunigungssensoren 130 ist ausgebildet, um ein Beschleunigungssignal 135 bereitzustellen, welches eine Beschleunigung $a_z$ senkrecht zur Fahrtrichtung in Richtung einer Hochachse des Fahrzeugs repräsentiert. Der weitere Beschleunigungssensor 130 ist ausgebildet, um ein weiteres Beschleunigungssignal 135 bereitzustellen, welches eine Beschleunigung $a_y$ quer zur Fahrtrichtung des Fahrzeugs repräsentiert. Eine der Filtereinrichtungen 310 ist ausgebildet, um die beiden Beschleunigungssignale 135 zu empfangen, ein gefiltertes Beschleunigungssignal zu erzeugen und die gefilterten Beschleunigungssignale an eine Einrichtung 320 zur Bestimmung einer Überrollart auszugeben. Die Einrichtung 320 zur Bestimmung einer Überrollart ist ausgebildet, die gefilterten Beschleunigungssignale zu empfangen. In der Einrichtung 320 des Bestimmens einer Überrollart wird aus den beiden gefilterten Beschleunigungssignalen eine Überrollart bestimmt, wobei unterschieden werden kann zwischen Böschungs-, Abhang-, Bordsteinanprall- oder Bodenverhakung- beziehungsweise "Soil Trip"-Überschlag. Die Einrichtung 320 zur Bestimmung einer Überrollart ist ausgebildet, die Überrollart an eine Einrichtung 330 der Auswahl der Schwellwertkalkulation auszugeben. Ein Drehratensensor 120 ist ausgebildet, eine Drehrate 125 bzw. eine Rollrate 125 bereitzustellen. Die Einrichtung 340 des Integrierens ist ausgebildet, eine Rollrate 125 zu empfangen und die Rollrate 125 über die Zeit zu integrieren, um einen Rollwinkel 345 zu bestimmen. Die Einrichtung 340 des Integrierens ist ausgebildet, den Rollwinkel 345 auszugeben und an die Einrichtung 330 zur Auswahl der Schwellwertkalkulation weiterzuleiten. Die Einrichtung 330 der Auswahl der Schwellwertkalkulation ist ausgebildet die Rollrate 125, den Rollwinkel 345 sowie die Überrollart zu empfangen. Die Einrichtung 330 der Auswahl der Schwellwertkalkulation ist ausgebildet unter Verwendung der Überrollart eine Schwellwertberechnung 350, 355 auszuwählen und die empfangenen Signale an die Schwellwertberechnung 350 und an die Schwellwertberechnung 355 entsprechend der ausgewählten Schwellwertberechnung auszugeben. Die Einrichtung 350 zur Schwellwertberechnung für einen Böschungs- oder Abhang-Überschlag ist ausgebildet, die Rollrate 125 und den Rollwinkel 345 zu empfangen und einen Schwellwert für das Auslösen einer Sicherheitseinrichtung entsprechend für einen Böschungs- oder Abhang-Überschlag zu bestimmen. Die Einrichtung 350 zur Schwellwertberechnung ist ausgebildet, den berechneten Schwellwert auszugeben. Die Einrichtung 355 zur Schwellwertberechnung für einen Bordsteinanprall- oder Bodenverhakung- beziehungsweise "Soil Trip"-Überschlag ist ausgebildet, die Rollrate 125 und dem Rollwinkel 345 zu empfangen und einen Schwellwert für das Auslösen einer Sicherheitseinrichtung entsprechend für einen Bordsteinanprall- oder Bodenverhakung- beziehungsweise "Soil Trip"-Überschlag zu bestimmen. Die Einrichtung 355 zur Schwellwertberechnung ist ausgebildet, den berechneten Schwellwert auszugeben.

Der Filter 311 ist ausgebildet die Rollrate 125 des Drehratensensors 120 zu empfangen, die Rollrate 125 zu filtern, um eine gefilterte Rollrate zu bestimmen und die gefilterte Rollrate auszugeben. Die Einrichtung 360 zur Überwachung des Überschlagsschwellwertes ist ausgebildet, die gefilterte Rollrate sowie den Schwellwert für das Auslösen einer Sicherheitseinrichtung zu empfangen. Die Einrichtung 360 zur Überwachung des Überschlagsschwellwertes ist ausgebildet, den Betrag der gefilterten Rollrate mit dem Schwellwert für das Auslösen einer Sicherheitseinrichtung zu vergleichen und das Ergebnis als Auslöseentscheidung auszugeben. Die Einrichtung 370 zur Auslöseentscheidung ist ausgebildet, die Auslöseentscheidung der Einrichtung 360 zur Überwachung des Überschlagsschwellwertes zu empfangen. Die Einrichtung 370 zur Auslöseentscheidung ist weiterhin ausgebildet, das Ergebnis der Einheit 380 zur Plausibilisierung der Auslöseentscheidung zu empfangen und bei einer Plausibilität und einer positiven Auslöseentscheidung ein Ansteuerungssignal auszugeben.

Der Filter 312 ist ausgebildet, ein Beschleunigungssignal 135 von einem Beschleunigungssensor 130 zu empfangen, das Beschleunigungssignal 135 zu filtern und das Ergebnis als gefiltertes Beschleunigungssignal auszugeben. Der Filter 313 ist ausgebildet, ein weiteres Beschleunigungssignal 135 von einem weiteren Beschleunigungssensor 130 zu empfangen, das weitere Beschleunigungssignal 135 zu filtern und das Ergebnis als weiteres gefiltertes Beschleunigungssignal auszugeben. Die Einheit 380 zur Plausibilisierung der Auslöseentscheidung ist ausgebildet, das gefilterte Beschleunigungssignal sowie das weitere gefilterte Beschleunigungssignal zu empfangen und aus den beiden Beschleunigungssignalen die Plausibilität für einen Überschlag zu bestimmen. Die Einheit 380 zur Plausibilisierung der Auslöseentscheidung ist weiterhin ausgebildet, das Ergebnis der Plausibilisierung auszugeben.

Fig. 3 zeigt den Datenfluss eines Algorithmus vereinfacht dargestellt. Auch ist der parallel zur drehratenbasierten Entscheidung verlaufende Plausibilisierungspfad basierend auf den Beschleunigungen in y- und z-Richtung gezeigt.

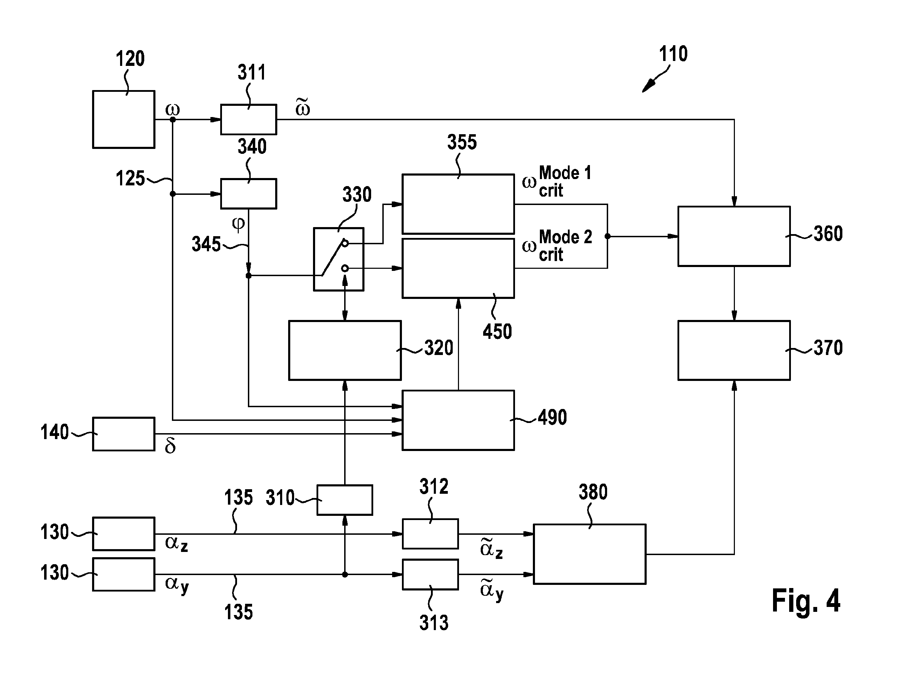

Fig. 4 zeigt eine weitere Vorrichtung, die ausgebildet ist, einen Überschlag-Erkennungsalgorithmus gemäß einem weiteren Ausführungsbeispiel der vorliegenden Erfindung auszuführen. Die Vorrichtung entspricht weitgehend der in Fig. 3 gezeigten Vorrichtung und weist neben einem Steuergerät 110, einem Drehwinkelsensor 120 und zwei Beschleunigungssensoren 130 einen Lenkwinkelsensor 140 auf. Das Steuergerät 110 weist im Unterschied zu dem in Fig. 3 gezeigten Steuergerät anstelle der dort gezeigten Einrichtung zur Schwellwertberechnung 350 eine Einrichtung 450 zur Schwellwertberechnung auf sowie eine zusätzliche Einheit 490 zur Bestimmung eines Schwellwertkorrekturwertes.

Die Einrichtung 330 der Auswahl der Schwellwertkalkulation ist ausgebildet unter Verwendung der Überrollart eine Schwellwertberechnung 355, 450 auszuwählen und die empfangenen Signale an die Schwellwertberechnung 450 und an die Schwellwertberechnung 355 entsprechend der ausgewählten Schwellwertberechnung auszugeben. Die Einheit 490 zur Bestimmung eines Schwellwertkorrekturwertes ist ausgebildet, die Rollrate 125, den Rollwinkel 345 sowie den Lenkwinkel 145 zu empfangen, einen Korrekturwert für die Schwellwertkalkulation zu bestimmen und den bestimmten Korrekturwert für die Schwellwertkalkulation auszugeben. Die Einrichtung 450 zur Schwellwertberechnung für einen Böschungs- oder Abhang-Überschlag ist ausgebildet, die Rollrate 125, den Rollwinkel 345 und den Korrekturwert für die Schwellwertkalkulation zu empfangen und einen Schwellwert für das Auslösen einer Sicherheitseinrichtung entsprechend für einen Böschungs- oder Abhang-Überschlag zu bestimmen. Die Einrichtung 450 zur Schwellwertberechnung ist ausgebildet, den berechneten Schwellwert auszugeben.

Durch das in Fig. 4 gezeigte Ausführungsbeispiel wird der in Fig. 3 dargestellte Algorithmus um das Modul "LenkwinkelAddOn" erweitert.

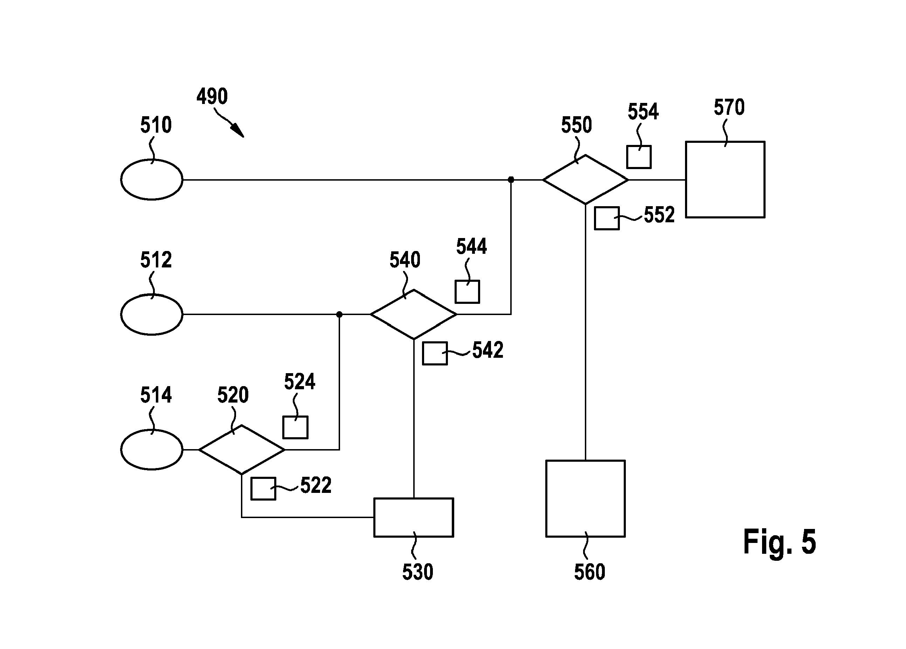

Fig. 5 zeigt ein Ablaufdiagramm eines Verfahrens zur Bestimmung eines Schwellwertkorrekturwertes gemäß einem Ausführungsbeispiel der vorliegenden Erfindung. Das Verfahren kann in einer Einheit 490 zur Bestimmung eines Schwellwertkorrekturwertes ausgeführt werden, wie sie anhand von Fig. 4 beschrieben ist. Das Verfahren kann beispielsweise genutzt werden, um in einem Überschlag-Erkennungsalgorithmus den Korrekturwert für den Schwellwert zu bestimmen.

Das Verfahren weist auf einen Block 510, der einen Lenkwinkel $\delta$ bereitstellt, einen Block 512, der einen Rollwinkel $\varphi$ bereitstellt, und einen Block 514, der eine Rollrate $\omega$ bereitstellt. Ein Auswahlblock 520 ist ausgebildet, die Rollrate $\omega$ zu empfangen und die eingelesene Rollrate $\omega$ mit einer vorabdefinierten minimalen Rollrate $\omega_{min}$ zu verglei-chen. Hierzu ist der Auswahlblock 520 ausgebildet die Funktion $\omega > \omega_{min}$ auszuführen. Bei einem negativen Ergebnis 522 des Vergleichs $\omega > \omega_{min}$ im Block 520, bei dem also die Rollrate $\omega$ nicht größer als die vorabdefinierte minimale

Rollrate $\omega_{min}$ ist, wird im Block 530 ein Korrekturwert für die Schwellwertkalkulation AddOn_value auf Null gesetzt. Bei einem positiven Ergebnis 524 des Vergleichs $\omega > \omega_{min}$ im Block 520, bei dem also die Rollrate $\omega$ größer als die vorabdefinierte minimale Rollrate $\omega_{min}$ ist, wird im Block 540 der Rollwinkel $\varphi$ mit einem vorabdefinierten maximalen Rollwinkel $\varphi_{max}$ vergleichen. Der Block 540 ist ausgebildet, um den Rollwinkel $\varphi$ zu empfangen und die Funktion $\varphi < \varphi_{max}$ auszuführen. Bei einem negativen Ergebnis 542 des Vergleichs $\varphi < \varphi_{max}$ im Block 540, bei dem also der Rollwinkel $\varphi$ nicht kleiner als der maximalen Rollwinkel $\varphi_{max}$ ist, wird im Block 530 der Korrekturwert für die Schwellwertkalkulation AddOn_value auf Null gesetzt. Bei einem positiven Ergebnis 544 des Vergleichs $\varphi < \varphi_{max}$ im Block 540, bei dem also der Rollwinkel $\varphi$ kleiner als der maximalen Rollwinkel $\varphi_{max}$ ist, wird im Block 550 das Ergebnis einer Multiplikation des Lenkwinkels $\delta$ mit dem Rollwinkel $\varphi$ auf einen Wert über Null überprüft. Der Block 550 ist ausgebildet, um den Lenkwinkel $\delta$ und den Rollwinkel $\varphi$ zu empfangen und die Funktion $\delta\varphi > 0$ auszuführen. Bei einem negativen Ergebnis 552 des Vergleichs $\delta\varphi > 0$, wenn also das Ergebnis einer Multiplikation des Lenkwinkels $\delta$ mit dem Rollwinkel $\varphi$ nicht größer als Null ist, wird im Block 560 der Korrekturwert für die Schwellwertkalkulation AddOn_value mittels einer Multiplikation einer vordefinierten Lenkwinkelkonstante Par_AddOnIncMax mit dem Quotienten aus Lenkwinkel $\delta$ und dem maximalen Lenkwinkel des Fahrzeugs Par_DeltaMax gebildet. Der Block 560 ist ausgebildet, um den Lenkwinkel $\delta$ zu empfangen, die Funktion AddOn_value = $\delta$*Par-AddOnIncMax/Par-DeltaMax auszuführen und den Korrekturwert für den Schwellwert AddOn_value auszugeben.

Bei einem positiven Ergebnis 554 des Vergleichs $\delta\varphi > 0$, wenn also das Ergebnis der Multiplikation des Lenkwinkels $\delta$ mit dem Rollwinkel $\varphi$ größer als Null ist, wird im Block 570 der Korrekturwert für die Schwellwertkalkulation AddOn_value mittels einer Multiplikation einer weiteren vordefinierten Lenkwinkelkonstante Par_AddOnLowerMax mit dem Quotienten aus Lenkwinkel $\delta$ und dem maximalen Lenkwinkel des Fahrzeugs Par_DeltaMax bestimmt. Der Block 570 ist ausgebildet, um den Lenkwinkel $\delta$ zu empfangen, die Funktion AddOn_value = $\delta$*Par_AddOnLowerMax/Par-DeltaMax auszuführen und den Korrekturwert für den Schwellwert AddOn_value auszugeben.

Je nach Ausgang der beschriebenen Vergleiche wird der Schwellwertkorrekturwert der Einheit 490 somit entweder durch den Block 530, den Block 560 oder den Block 570 gebildet.

Gemäß einem Ausführungsbeispiel wird im Folgenden anhand von Fig. 5 ein Modul zur Berechnung des Korrekturwerts für den Schwellwert AddOn-Wert unter Verwendung des Lenkwinkels beschrieben. In Fig. 5 ist gezeigt, dass nur in dem Fall ein Korrekturwert AddOn_value für die Auslöse-Schwelle berechnet wird, wenn der aktuelle Roll-Winkel $\varphi$ (phi) einen applizierbaren Wert $\varphi_{max}$ (phi_max) noch nicht überschreitet, denn nur dann kommen die Effekte der Radstellung voll zum tragen und nur dann kann eine Performance-Verbesserung erreicht werden. Optional kann auch noch eine Mindestrollrate bestimmt werden, unterhalb derer kein Korrekturwert AddOn_value berechnet wird. Sind beide genannten Bedingungen erfüllt, werden zwei Fälle unterschieden, je nach Vorzeichenkonvention der Winkel.

In einem ersten Fall ist die Lenkung böschungsaufwärts, d. h. phi*delta > 0. Dann gilt für den Korrekturwert:

$$\text{AddOn\_value} = \text{delta*Par\_AddOnLowerMax / Par\_DeltaMax.}$$

Hierbei wird der Parameter Par_DeltaMax so appliziert, dass er dem maximal erreichbaren Lenkwinkel des jeweiligen Fahrzeugs entspricht. Mithilfe des Parameters Par_AddOnLowerMax (>= 0) kann die Bedeutung des Korrekturwerts, d. h. die AddOn Stärke eingestellt werden.

In einem zweiten Fall ist die Lenkung böschungsabwärts, d. h. phi*delta < 0. Dann gilt für den Korrekturwert:

$$\text{AddOn\_value} = \text{delta*Par\_AddOnIncMax / Par\_DeltaMax.}$$

Hierbei wird der Parameter Par_DeltaMax so appliziert, dass er dem maximal erreichbaren Lenkwinkel des jeweiligen Fahrzeugs entspricht. Mithilfe des Parameters Par_AddOnIncMax (<= 0) kann die Bedeutung des Korrekturwerts, d. h. die AddOn Stärke eingestellt werden.

In der hier vorgeschlagenen Lösung ist der Korrekturwert AddOn_value jeweils proportional zum aktuellen Lenkwinkel $\delta$. Alternativ kann ab Erreichen eines speziellen Lenkwinkels $\delta$ nur ein fester Korrekturwert für den Schwellwert AddOn_value genommen werden.

Entsprechend zu dem in Fig.4 gezeigten Ausführungsbeispiel wird der berechnete Korrekturwert AddOn_value auf die applizierte winkelabhängige Schwelle für die momentane (gefilterte) Rollrate addiert, für den Fall, dass der Rampen/Böschungspfad ausgewählt wurde. Es gilt:

$$\text{Omeg\_crit} = \text{Omega\_crit} + \text{AddOn\_value}$$

Damit wird die Schwelle sensitiver oder robuster und entsprechend wird der Auslösezeitpunkt der Situation angepasst.

Die im Bezug auf die Figur 5 genannten expliziten Bezeichnungen sind nur exemplarisch genannt und nicht eigentlich relevant für die beschriebene Funktion. Beispielsweise aus Laufzeitgründen kann auch eine etwas andere Implementierung gewählt werden.

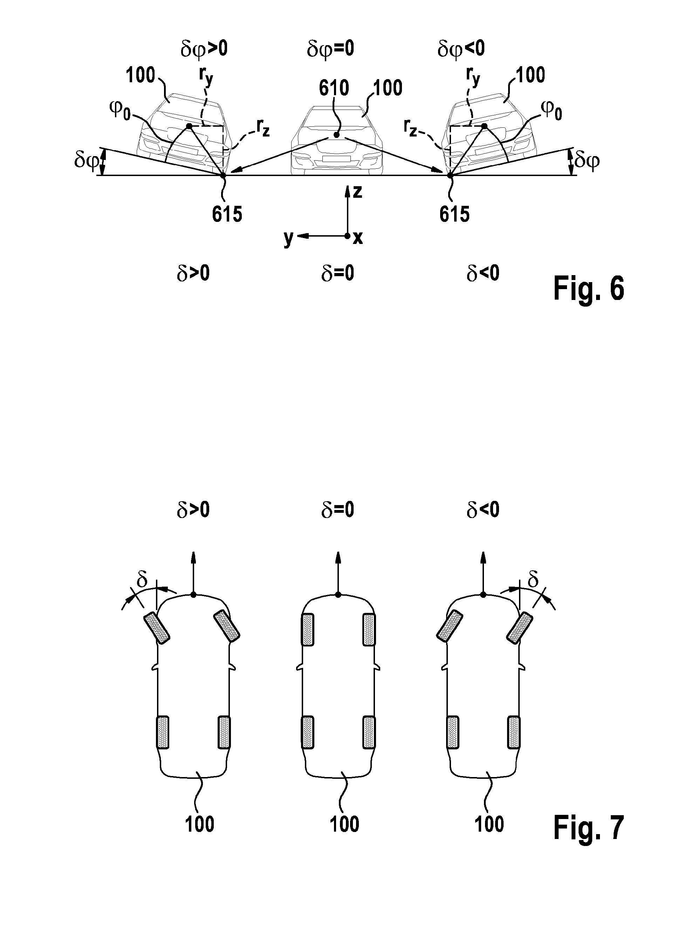

Die Figuren 6 und 7 zeigen anhand eines stehenden Fahrzeugs die Vorzeichenkonvention für den Rollwinkel und den Lenkwinkel. Dabei zeigt Fig. 6 das stehende Fahrzeug von hinten und Fig. 7 zeigt das stehende Fahrzeug von oben.

Fig. 6 zeigt ein Fahrzeug 100 in drei Ansichten von hinten. Dabei zeigt die mittlere Ansicht das Fahrzeug in der Ebene und die beiden anderen Ansichten zeigen das Fahrzeug in einer Rotationssituation. Die mittlere Ansicht zeigt das Fahrzeug 100 mit einem Lenkwinkel $\delta$ von Null und einem Rollwinkel $\varphi$ von Null. Der Rotationspunkt 610 liegt im Inneren des Fahrzeugs. Bei dem Rotationspunkt handelt es sich um eine Rotationsachse, die parallel zur Fahrzeuglängsachse verläuft. Das Fahrzeugkoordinatensystem ist ein kartesisches Koordinatensystem. Die x-Achse entspricht der Fahrzeuglängsachse vom Heck zur Front des Fahrzeugs. Somit verläuft in Fig. 6 die x-Achse vom Betrachter weg. Die y-Achse steht senkrecht auf der x-Achse und verläuft in der Fahrebene. Die y-Achse wird auch als Nick- oder Querachse bezeichnet. Sie verläuft in Fig. 6 nach links. Eine Drehung um die senkrecht zur x-Achse des Fahrzeugs verlaufende y-Achse wird Nicken bezeichnet. Die senkrecht auf der x-y-Ebene des Fahrzeugs stehende z-Achse wird auch als Gier-, Hoch- oder Vertikalachse bezeichnet. Die rechte Ansicht des Fahrzeugs 100 zeigt das Fahrzeug 100 in einer Rotationssituation. Ein Rotationspunkt 615 (point of rotation) liegt an der Außenkante der Räder auf der linken Fahrzeugseite am Schnittpunkt mit einer Fahrbahn oder Standfläche des Fahrzeugs 100. Der Rollwinkel $\varphi_0$ hat seinen Scheitelpunkt im Rotationspunkt 615, ein Schenkel des Rollwinkels $\varphi_0$ verläuft in der Fahrbahn beziehungsweise Standfläche des Fahrzeugs, der andere Schenkel des Rollwinkels $\varphi_0$ verläuft durch den Punkt, der bei einem stehenden Fahrzeug in der Ebene den Rotationspunkt 610 kennzeichnet. Eine Projektion des Rotationspunktes 610 des stehenden Fahrzeugs auf die y-Achse und z-Achse ergibt einen Radius $r_y$ und einen Radius $r_z$. Die Multiplikation von $\varphi\delta$ ist kleiner null, unter der Annahme, dass der Lenkwinkel kleiner null ist.

Die linke Ansicht des Fahrzeugs 100 zeigt das Fahrzeug 100 in einer Rotationssituation. Ein Rotationspunkt 615 (point of rotation) liegt an der Außenkante der Räder auf der rechten Fahrzeugseite am Schnittpunkt mit einer Fahrbahn oder Standfläche des Fahrzeugs 100. Der Rollwinkel $\varphi_0$ hat seinen Scheitelpunkt im Rotationspunkt 615, ein Schenkel des Rollwinkels $\varphi_0$ verläuft in der Fahrbahn beziehungsweise Standfläche des Fahrzeugs, der andere Schenkel des Rollwinkels $\varphi_0$ verläuft durch den Punkt, der bei einem stehenden Fahrzeug in der Ebene den Rotationspunkt 610 kennzeichnet. Eine Projektion des Rotationspunktes 610 des stehenden Fahrzeugs auf die y-Achse und z-Achse ergibt einen Radius $r_y$ und einen Radius $r_z$. Die Multiplikation von $\varphi\delta$ ist größer null, unter der Annahme, dass der Lenkwinkel $\delta$ größer null ist.

Fig. 7 zeigt ein Fahrzeug 100 in drei Ansichten von oben. Die positive x-Achse verläuft in Fahrtrichtung des Fahrzeugs 100. Die mittlere Ansicht des Fahrzeugs 100 weist keinen Lenkeinschlag auf, das heißt, der Lenkwinkel $\delta$ ist null. Die Räder des Fahrzeugs 100 in der rechten Ansicht sind nach rechts eingeschlagen. Der Lenkwinkel $\delta$ wird als kleiner null definiert. Die Räder des Fahrzeugs 100 in der linken Ansicht sind nach links eingeschlagen. Der Lenkwinkel $\delta$ wird als größer null definiert.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

**Patentansprüche**

1. Verfahren zur Ansteuerung einer Sicherungseinrichtung (150) für ein Fahrzeug (100) in einer Überrollsituation, wobei das Verfahren den folgenden Schritt aufweist:

   Bestimmen (268) eines Ansteuerungssignals (155) zum Ansteuern der Sicherungseinrichtung (155) basierend auf einer den Neigungswinkel des Fahrzeugs (100) in eine Fahrzeugquerrichtung ($r_y$) repräsentierenden Größe und einer den Lenkeinschlag eines Rades des Fahrzeugs (100) repräsentierenden Größe.

2. Verfahren gemäß Anspruch 1, **dadurch gekennzeichnet, dass** die den Neigungswinkel des Fahrzeugs (100) in eine Fahrzeugquerrichtung (ry) repräsentierende Größe ein Rollwinkel (345; $\varphi$) des Fahrzeugs (100) ist.

3. Verfahren gemäß Anspruch 1 oder 2, **dadurch gekennzeichnet, dass** die den Lenkeinschlag eines Rades des Fahrzeugs (100) repräsentierende Größe ein Lenkwinkel (145; $\delta$) des Fahrzeugs (100) ist.

4. Verfahren gemäß einem der vorangegangenen Ansprüche, **dadurch gekennzeichnet, dass** die den Neigungswinkel repräsentierende Größe mit der den Lenkeinschlag repräsentierenden Größe verknüpft wird und die Ansteuerung der Sicherheitseinrichtung (150) auf der Verknüpfung basiert.

5. Verfahren gemäß einem der vorangegangenen Ansprüche, bei dem das Ansteuerungssignal (155) ferner basierend auf zumindest einem Beschleunigungswert (135) bestimmt wird, wobei der Beschleunigungswert (135) eine lineare Beschleunigung des Fahrzeugs (100) repräsentiert.

6. Verfahren gemäß Anspruch 5, mit einem Schritt (262) des Ermittelns einer Überrollart der Überrollsituation basierend auf dem zumindest einem Beschleunigungswert (135), wobei im Schritt (268) des Bestimmens das Ansteuersignal (155) basierend auf der Überrollart, dem Rollwinkel (345; $\varphi$) und dem Lenkwinkel (145; $\delta$) bestimmt wird.

7. Verfahren gemäß einem der Ansprüche 3 bis 6, mit einem Schritt (264) des Normierens des Lenkwinkels (145; $\delta$) unter Verwendung eines maximal erreichbaren Lenkwinkels des Fahrzeugs (100), um einen normierten Lenkwinkel zu ermitteln, wobei im Schritt (268) des Bestimmens das Ansteuerungssignal (155) basierend auf dem normierten Lenkwinkel bestimmt wird.

8. Verfahren gemäß einem der Ansprüche 2 bis 7, mit einem Schritt (266) des Schwellwertbestimmens eines Schwellwertes unter Verwendung einer Rollrate (125), dem Rollwinkel (345; $\varphi$) und dem Lenkwinkel (145; $\delta$), wobei im Schritt (268) des Bestimmens das Ansteuerungssignal (155) basierend auf dem Schwellwert bestimmt wird.

9. Verfahren gemäß der Anspruch 8, wobei im Schritt (266) des Schwellwertbestimmens der normierte Lenkwinkel in Abhängigkeit einer in Bezug zu dem Rollwinkel (345; $\varphi$) gesetzten Lenkwinkelrichtung mit einer vordefinierten Lenkwinkelkonstante multipliziert wird, um einen Korrekturwert für den Schwellwert zu bestimmen und der Schwellwert unter Verwendung des Korrekturwerts bestimmt wird.

10. Verfahren gemäß Anspruch 9, bei dem im Schritt (266) des Schwellwertbestimmens in Abhängigkeit eines Vergleichs des Rollwinkels (345; $\varphi$) mit einem maximalen Rollwinkelwert und einem Vergleich der Rollrate (125) mit einem minimalen Rollratenwert der Rollwinkel (345; $\varphi$) mit dem Lenkwinkel (145; $\delta$) multipliziert wird, um einen Ergebniswert zu erhalten und abhängig von einem Vorzeichen des Ergebniswerts der Schwellwert unter Verwendung des im Schritt (264) des Normierens bestimmten normierten Lenkwinkels und der vordefinierten Lenkwinkelkonstante oder unter Verwendung des im Schritt des Normierens bestimmten normierten Lenkwinkels und einer weiteren vordefinierten Lenkwinkelkonstante bestimmt wird.

11. Steuergerät (110) zur Ansteuerung einer Sicherungseinrichtung (150) für ein Fahrzeug (100) in einer Überrollsituation, das Einrichtungen aufweist, die ausgebildet sind, um die Schritte eines Verfahrens gemäß einem der Ansprüche 1 bis 10 durchzuführen.

12. Sicherungsvorrichtung für ein Fahrzeug mit folgenden Merkmalen:

   einer Sicherungseinrichtung (150); und
   einem Steuergerät (110) zur Ansteuerung einer Sicherungseinrichtung (150) gemäß Anspruch 11, wobei das Steuergerät (110) ausgebildet ist, um das Ansteuersignal (155) für die Sicherungseinrichtung (150) zu bestimmen.

13. Computer-Programmprodukt mit Programmcode zur Durchführung des Verfahrens nach einem der Ansprüche 1 bis 10, wenn der Programmcode auf einer Vorrichtung ausgeführt wird.

100

110

120  125

130  135

140  145

150

155

**Fig. 1**

110

262

264

266

268

**Fig. 2**

Fig. 3

Fig. 4

EP 2 674 332 A1

Fig. 5

δφ>0  δφ=0  δφ<0

100  r_y  610  100  r_y  100

φ_0  r_z  δφ  φ_0

δφ  δφ

615  615

z

y  x

δ>0  δ=0  δ<0

**Fig. 6**

δ>0  δ=0  δ<0

δ  δ

100  100  100  **Fig. 7**

Europäisches
Patentamt

European
Patent Office

Office européen
des brevets

# EUROPÄISCHER RECHERCHENBERICHT

Nummer der Anmeldung

EP 13 16 7763

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 228 267 A2 (FORD GLOBAL TECH LLC [US]) 15. September 2010 (2010-09-15) * Absatz [0030] - Absatz [0034] * * Absatz [0051] * * Absatz [0055] * * Absatz [0057] - Absatz [0059] * ----- | 1-8, 11-13 | INV. B60R21/0132 |
| X | WO 2008/037598 A1 (SIEMENS VDO AUTOMOTIVE AG [DE]; BONITZ JOCHEN [DE]; PAGGEL JENS [DE]) 3. April 2008 (2008-04-03) * Seite 10, Zeile 24 - Seite 12, Zeile 9 * * Seite 10, Zeile 6 - Zeile 11 * ----- | 1-6,8, 11-13 | |
| X | EP 1 486 382 A2 (NISSAN MOTOR [JP]) 15. Dezember 2004 (2004-12-15) * Absatz [0017] - Absatz [0019] * * Absatz [0041] - Absatz [0044] * ----- | 1-6,8, 11-13 | |
| X A | US 2008/114509 A1 (INOUE SATORU [JP] ET AL) 15. Mai 2008 (2008-05-15) * Absatz [0025] - Absatz [0028] * ----- | 1-5, 11-13 8,10 | RECHERCHIERTE SACHGEBIETE (IPC) |
| X | GB 2 442 097 A (FORD GLOBAL TECH LLC [US]) 26. März 2008 (2008-03-26) * Seite 9, Zeile 27 - Seite 12, Zeile 18 * * Seite 14, Zeile 13 - Zeile 23 * ----- | 1-5, 11-13 | B60R |
| X | DE 10 2004 038000 A1 (CONTI TEMIC MICROELECTRONIC [DE]) 16. März 2006 (2006-03-16) * Absatz [0013] - Absatz [0026] * ----- | 1-3 | |
| X A | EP 1 642 780 A1 (DELPHI TECH INC [US]) 5. April 2006 (2006-04-05) * Absatz [0055] - Absatz [0057] * * Absatz [0007] * * Absatz [0037] * ----- -/-- | 1 7 | |

Der vorliegende Recherchenbericht wurde für alle Patentansprüche erstellt

| Recherchenort | Abschlußdatum der Recherche | Prüfer |
|---|---|---|
| Berlin | 29. August 2013 | Standring, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 13 16 7763

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2008/262680 A1 (YEH HUAHN-FERN [US] ET AL) 23. Oktober 2008 (2008-10-23) * das ganze Dokument * ----- | 1-13 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Berlin | 29. August 2013 | Standring, Michael |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 13 16 7763

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2013

| Im Recherchenbericht angeführtes Patentdokument | Datum der Veröffentlichung | Mitglied(er) der Patentfamilie | Datum der Veröffentlichung |
|---|---|---|---|
| EP 2228267 A2 | 15-09-2010 | CN 101830206 A<br>EP 2228267 A2<br>US 2009174174 A1 | 15-09-2010<br>15-09-2010<br>09-07-2009 |
| WO 2008037598 A1 | 03-04-2008 | DE 102006045682 B3<br>WO 2008037598 A1 | 07-02-2008<br>03-04-2008 |
| EP 1486382 A2 | 15-12-2004 | EP 1486382 A2<br>JP 3890477 B2<br>JP 2005001522 A<br>US 2004254710 A1 | 15-12-2004<br>07-03-2007<br>06-01-2005<br>16-12-2004 |
| US 2008114509 A1 | 15-05-2008 | CN 101115645 A<br>DE 112005003489 T5<br>JP 4503480 B2<br>JP 2006282054 A<br>US 2008114509 A1<br>WO 2006112094 A1 | 30-01-2008<br>03-01-2008<br>14-07-2010<br>19-10-2006<br>15-05-2008<br>26-10-2006 |
| GB 2442097 A | 26-03-2008 | DE 102007041118 A1<br>GB 2442097 A<br>US 2007017727 A1<br>US 2011010048 A1 | 10-04-2008<br>26-03-2008<br>25-01-2007<br>13-01-2011 |
| DE 102004038000 A1 | 16-03-2006 | KEINE | |
| EP 1642780 A1 | 05-04-2006 | AT 365658 T<br>DE 602004007270 T2<br>EP 1642780 A1<br>US 2006074534 A1 | 15-07-2007<br>21-02-2008<br>05-04-2006<br>06-04-2006 |
| US 2008262680 A1 | 23-10-2008 | US 2008262680 A1<br>WO 2008123984 A1 | 23-10-2008<br>16-10-2008 |

EPO FORM P0461

Für nähere Einzelheiten zu diesem Anhang : siehe Amtsblatt des Europäischen Patentamts, Nr.12/82